(19) Europäisches Patentamt
European Patent Office
Office européen des brevets

(11) **EP 1 916 857 B1**

(12) **EUROPEAN PATENT SPECIFICATION**

(45) Date of publication and mention
of the grant of the patent:
**29.09.2010 Bulletin 2010/39**

(51) Int Cl.:
***H04W 60/04*** *(2009.01)*   *H04W 24/02* *(2009.01)*

(21) Application number: **06022488.8**

(22) Date of filing: **27.10.2006**

(54) **Methods and devices for determining a tracking area of a wireless cellular telecommunication network comprising plural tracking areas**

Verfahren und Vorrichtung zur Bestimmung eines Nachführgebiets eines drahtlosen zellularen Telekommunikationsnetzes mit einer Mehrzahl von Nachführgebieten

Procédé et appareil de détermination d'une région de poursuite d'un réseau de télécommunication sans fil cellulaire comprenant plusieurs régions de poursuite

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**30.04.2008 Bulletin 2008/18**

(73) Proprietors:
• **Mitsubishi Electric R&D Centre Europe B.V.**
  **1119 NS  Schiphol Rijk (NL)**
  Designated Contracting States:
  **FR**
• **MITSUBISHI DENKI KABUSHIKI KAISHA**
  **Chiyoda-ku, Tokyo 100-8310 (JP)**
  Designated Contracting States:
  **AT BE BG CH LI CY CZ DE DK EE ES FI GB GR HU IE IS IT LT LU LV MC NL PL PT RO SE SI SK TR**

(72) Inventors:
• **Voyer, Nicolas**
  **CS 10806**
  **35708 Rennes Cedex 7 (FR)**
• **Okubo, Akira**
  **CS 10806**
  **35708 Rennes Cedex 7 (FR)**

(74) Representative: **Maillet, Alain**
  **Cabinet Le Guen Maillet**
  **5 Place Newquay**
  **B.P. 70250**
  **25802 Dinard Cedex (FR)**

(56) References cited:
**EP-A- 1 511 333      EP-A- 1 715 715**
**WO-A-2006/094295**

## Description

The present invention relates to methods and devices for determining a tracking area of a wireless cellular telecommunication network comprising plural tracking areas.

A wireless cellular telecommunication network like a mobile telecommunication network, that provides telecommunication services to mobile terminals wandering inside an area composed of multiple cells of the base stations of the wireless telecommunication network, typically offers means to the mobile telecommunication operator to determine any time, the location of the mobile terminal in order to enable a communication session establishment with the mobile terminal.

Usual wireless cellular telecommunication networks can track the location of the mobile terminal which is in idle mode using Tracking areas (TA). Each cell is assigned to a tracking area. When the mobile terminal which is in idle mode enters in a cell of another tracking area, the mobile terminal sends a Tracking Area Update (TAU) message to a Mobility Management Entity (MME) through the base station which manages the cell it enters, in order to inform the mobility management entity in which tracking area, the mobile terminal is located. The mobility management entity is thus kept informed of the location of the mobile terminal within a pool area, which is defined as a set of multiple tracking areas.

When an incoming call arrives for the mobile terminal, the mobility management entity sends a paging message to all the cells which belong to the corresponding tracking area. The mobile terminal which is in idle mode regularly listens to the paging channel of the cell it is located in and answers to the paging notification. Thanks to the tracking area concept, the mobile terminal doesn't need to send regular cell update messages. Consequently, the mobile terminal reduces its electric power consumption in comparison with cell update message technique.

The tracking area technique still provides some drawbacks. As example, when the mobile terminal is moving back and forth between two cells of different tracking areas, the mobile terminal sends each time a tracking area update message to the mobility management entity. Such case brings too much signalling.

In order to solve that problem, it has been proposed to define overlapping tracking areas. In such technique, a cell can be configured as belonging to at least two tracking areas. Then, when the mobile terminal moves from one cell of a first tracking area, to a cell of another tracking area, the mobile terminal goes through a cell which belongs to both tracking areas. The mobile terminal reports a tracking area update message only if the cell it is located in, no longer belongs to the initial tracking area assigned to the mobile terminal. Thus, when mobile terminal keeps moving at the edge of two cells, there is no longer any ping-pong effect as above mentioned one.

It has been proposed also to create, instead of having a single mobility management entity which manages a Pool Area, to have a pool of mobility management entities which manage the Pool area. Such technique avoids the presence of single point of failure in the network, as network can continue operation upon shutdown of one mobility management entity in the pool of mobility management entities. Such shutdown may happen due to malfunction or for maintenance purpose. Adding multiple mobility management entities in one pool area also avoids congestion problems which may occur when a single mobility management entity manages the pool area. The set of cells of a pool area offers a full meshed connectivity, i.e. each base station which manages a cell of the pool area is connected to each mobility management entity of the pool of mobility management entities.

As the geographical distribution and the velocity of mobile terminal evolves over time non uniformly across tracking areas and thus across pool areas, the level of signalling due to mobility conditions across tracking areas within a pool area, as well as between tracking areas of different pool areas will vary over time. The number and capacity of mobility management entities in each pool of mobility management entities needs to be large enough to cope with such variations of signalling level, so as to avoid congestion.

The number and the capacity of mobility management entities which form each pool of mobility management entities has a big impact on the deployment cost of the cellular communication network. Despite the overall number of mobile terminals is rather stable across the whole cellular network, the number and the capacity of mobility management entities in each pool area should be much larger than necessary, so as to cope with time variations of local density of mobile terminals in each pool area.

The patent application EP 1715715 discloses a method for reducing load on a first node in a cellular telecommunications network.

The patent application EP 1657949 discloses wireless communications, and more particularly, to the repeated reconnection and/or re-registration of a dormant mobile terminal as it moves back and forth across the border between adjacent packet zones.

One solution would be to engineer the wireless cellular telecommunication network with only one pool area, but then the full meshed connectivity property of the pool area puts restriction on the size of cellular network that can be deployed.

The aim of the invention is therefore to propose methods and devices which make it possible to avoid congestion problems of the mobility management entities of the wireless cellular telecommunication network.

To that end, the present invention concerns a method for determining a tracking area of a wireless cellular telecommunication network comprising plural tracking areas, each tracking area comprising plural cells in which mobile terminals are located, at least two tracking areas comprising cells comprised in the at least two tracking areas and cells belonging to a single tracking area, each cell being managed by a base station of the wireless cellular telecommunication network, characterised in that at least one base station managing a cell comprised in the at least two tracking areas executes the steps of:

- transferring a message to at least a mobile terminal comprised in the cell managed by the base station, the message comprising the identifiers of the at least two tracking areas in which the cell managed by the base station belongs to,
- receiving a message from the mobile terminal, the message comprising one single identifier among the identifiers transferred to the mobile terminal, the identifier being the identifier of the tracking area selected by the mobile terminal.

The present invention concerns also a base station of a wireless cellular telecommunication network comprising plural tracking areas, each tracking area comprising plural cells in which mobile terminals are located, at least two tracking areas comprising cells comprised in the at least two tracking areas and cells belonging to a single tracking area, each cell being managed by a base station of the wireless cellular network, characterised in that the base station managing a cell comprised in the at least two tracking areas comprises:

- means for transferring a message to at least a mobile terminal comprised in the cell managed by the base station, the message comprising the identifiers of the at least two tracking areas in which the cell managed by the base station belongs to,
- means for receiving a message from the mobile terminal, the message comprising one single identifier among the identifiers transferred to the mobile terminal, the identifier being the identifier of the tracking area selected by the mobile terminal.

Thus, it is possible to avoid congestion problems of the mobility management entities of the wireless telecommunication network.

By letting the mobile terminal deciding which tracking area it decides to belong to, the present invention avoids that too many terminals change of tracking area simultaneously. As far as each mobile terminal decides by itself the tracking area, some mobile terminals select a first tracking area, others another one. There is no more rapid modification of the congestion status of the mobility management entities.

According to a particular feature, the base station transfers additional information, the additional information being data representative of the distance between the cell managed by the base station and the frontier of at least one of the at least two tracking areas and/or of the congestion status of at least one mobility management entity the base station is connected to and/or of at least one probability associated to at least one of the at least two tracking areas and/or representative of a preferred tracking area among the at least two tracking areas.

Thus, the mobile terminal is able to select the tracking area according to the wireless cellular telecommunication network status and/or configuration.

The congestion problems are avoided efficiently.

According to a particular feature, the probability associated to one tracking area is determined from data representative of the distance between the cell managed by the base station and the frontier of at least one of the at least two tracking areas and/or of the congestion status of at least one mobility management entity the base station is connected to.

Thus, the number of signalling procedures at the edge of each tracking area can be minimised, while avoiding the congestion problems efficiently.

According to a particular feature, one probability is associated to each tracking area and the preferred tracking area is determined as the tracking area of which the associated probability is the highest among the probabilities.

Thus, the number of signalling procedures at the edge of each tracking area can be minimised, while avoiding the congestion problems efficiently.

According to still another aspect, the present invention concerns a method for determining a tracking area of a wireless cellular telecommunication network comprising plural tracking areas, each tracking area comprising plural cells in which mobile terminals are located, at least two tracking areas comprising cells comprised in the at least two tracking areas and cells belonging to a single tracking area, each cell being managed by a base station of the wireless cellular telecommunication network, characterised in that at least one mobile terminal located in a cell comprised in the at least two tracking areas executes the steps of:

- receiving a message from the base station managing the cell the mobile terminal is located in, the message comprising the identifiers of the tracking areas in which the cell managed by the base station belongs to,
- selecting one identifier among the identifiers received by the mobile terminal,
- transferring a message to the base station managing the cell the mobile terminal is located in, the message comprising the selected identifier.

The present invention concerns also a mobile terminal of a wireless cellular telecommunication network comprising plural tracking areas, each tracking area comprising plural cells in which mobile terminals are located, at least two tracking areas comprising cells comprised in the at least two tracking areas and cells belonging to a single tracking area, each cell being managed by a base station of the wireless cellular telecommunication network, the mobile terminal being located in a cell comprised in the at least two tracking areas, characterised in that the mobile terminal comprises:

- means for receiving a message from the base station managing the cell the mobile terminal is located in, the message comprising the identifiers of the tracking areas in which the cell managed by the base station belongs to,
- means for selecting one identifier among the identifiers received by the mobile terminal,
- means for transferring a message to the base station managing the cell the mobile terminal is located in, the message comprising the selected identifier.

Thus, it is possible to avoid congestion problems of the mobility management entities of the wireless telecommunication network.

By letting the mobile terminal deciding which tracking area it decides to belong to, the present invention avoids that too many terminals change of tracking area simultaneously. As far as each mobile terminal decides by itself the tracking area, some mobile terminals select a first tracking area, others another one. There is no more rapid modification of the congestion status of the mobility management entities.

According to a particular feature, the mobile terminal receives additional information, the additional information being data representative of the distance between the cell managed by the base station and the frontier of at least one of the at least two tracking areas and/or of the congestion status of at least one mobility management entity the base station is connected to and/or of a probability associated to at least one of the at least two tracking areas and/or representative of a preferred tracking area among the at least two tracking areas.

Thus, the mobile terminal is able to select the tracking area according to the wireless telecommunication network status and/or configuration.

The congestion problems are avoided efficiently.

Furthermore, if the additional information is representative of the distance between the cell managed by the base station and the frontier of at least one of the at least two tracking areas the mobile terminal selects the identifier of the tracking area which has the lowest distance value and avoids then any ping-pong effect as above mentioned one.

Furthermore, if the additional information is representative of a preferred tracking area, the mobile terminal is able to select the tracking area according to the wireless telecommunication network status and/or configuration in a simple way.

According to a particular feature, the identifier among the identifiers received by the mobile terminal is selected by generating a random value and comparing the generated random value with the probability associated to at least one of the at least two tracking areas.

Thus, by using a random value, there is no more rapid modification of the congestion status of the mobility management entities.

According to a particular feature, prior to receive the message from the base station of, the mobile terminal transfers periodically a message to the base station, the message being a tracking area update message.

Thus, as the message is periodical and the phase of the message varies among the mobile terminals, there is no more rapid modification of the congestion status of the mobility management entities.

According to still another aspect, the present invention concerns computer programs which can be directly loadable into a programmable device, comprising instructions or portions of code for implementing the steps of the methods according to the invention, when said computer programs are executed on a programmable device.

Since the features and advantages relating to the computer programs are the same as those set out above related to the methods and devices according to the invention, they will not.be repeated here.

According to still another aspect, the present invention concerns a signal transferred to a mobile terminal by a base station of a wireless cellular telecommunication network comprising plural tracking areas, each tracking area comprising plural cells, the base station managing a cell belonging to at least two tracking areas, the mobile terminal being located in the cell belonging to at least two tracking areas characterised in that the signal comprises the identifiers of the tracking areas in which the cell managed by the base station belongs to.

According to a particular feature, the signal further comprises additional information, the additional information being data representative of the distance between the cell managed by the base station and the frontier of at least one of the at least two tracking areas and/or of the congestion status of at least one mobility management entity the base station is connected to and/or of at least one probability associated to at least one of the at least two tracking areas and/or representative of a preferred tracking area among the at least two tracking areas.

Since the features and advantages relating to the signals are the same as those set out above related to the methods and devices according to the invention, they will not be repeated here.

The characteristics of the invention will emerge more clearly from a reading of the following description of an example embodiment, the said description being produced with reference to the accompanying drawings, among which :

Fig. 1 is a diagram representing the architecture of a wireless cellular telecommunication network in which the present invention is implemented ;
Fig. 2 is a block diagram of a base station according to the present invention;
Fig. 3 is a block diagram of a mobile terminal according to the present invention;
Fig. 4 represents an algorithm executed by a base station in order to transfer the identifiers of at least two tracking area and preferably additional information;
Fig. 5 represents an algorithm executed by a mobile terminal in order to determine a tracking area of a wireless cellular telecommunication network.
Figs. 6a to 6c represent an example of curves used for the determination of the additional information according to the present invention.

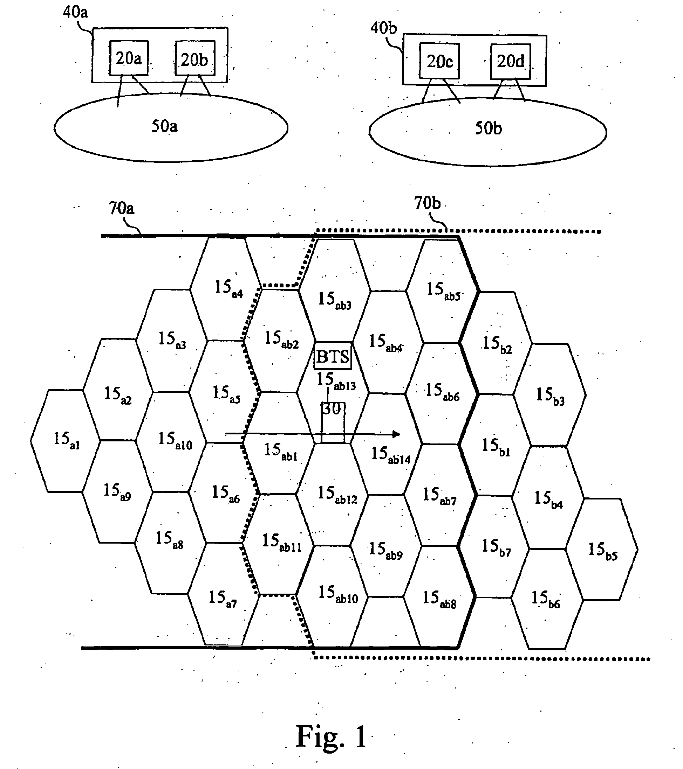

**Fig. 1** is a diagram representing the architecture of a wireless cellular telecommunication network in which the present invention is implemented.

In the wireless cellular telecommunication of the Fig. 1, two pools of mobility management entities noted 40a and 40b are shown.

The pool of mobility management entities 40a comprises as example two mobility management entities 20a and 20b, the pool of mobility management entities 40b comprises as example two mobility management entities 20c and 20d.

The mobility management entities 20a and 20b are each linked, through a telecommunication network 50a to each base station BTS which manages one of the cells $15_{a1}$ to $15_{a10}$ and $15_{ab1}$ to $15_{ab14}$ comprised in the tracking area 70a that the mobility management entities 20a and 20b manage.

The mobility management entities 20c and 20d are each linked, through a telecommunication network 50b to each base station BTS which manages one of the cells $15_{b1}$ to $15_{b7}$ and $15_{ab1}$ to $15_{ab14}$ comprised in the tracking area 70b that the mobility management entities 20c and 20d manage.

The cells $15_{ab1}$ to $15_{ab14}$ belong to both tracking area 70a and tracking area 70b, i.e. they belong to an overlapping area of two tracking areas 70.

A tracking area 70 comprises plural cells 15 in which, when a remote telecommunication device, not shown in the Fig. 1 intends to establish a communication with a mobile terminal 30, the mobility management entity 20 in charge of the mobile terminal 30, transfers to each base station BTS managing a cell 15 comprised in the tracking area 70, a paging message indicating that a remote telecommunication device intends to establish a communication with the mobile terminal 30.

Each base station BTS managing a cell 15 comprised in the tracking area transfers in response a paging message in the cell 15 it manages through its wireless interface 206.

The telecommunication networks 50a and 50b are, as example and in a non limitative way, dedicated wired networks, parts of public network like a public switched network, an IP based network, a wireless network, an Asynchronous Transfer Mode network or a combination of above cited networks.

Only one base station BTS is shown in the Fig. 1 for the sake of clarity. The base station BTS manages the cell $15_{ab13}$ in which the mobile terminal 30 is located.

Only one mobile terminal 30 is shown in the Fig. 1 for the sake of clarity but in practice, a more important number of mobile terminals 30 are located in the cells 15 of the wireless cellular telecommunication network.

The base station BTS is also named a node or a node B or an enhanced node B or an access point.

The mobile terminals are terminals like mobile phones, personal digital assistants, or personal computers.

According to the invention, each base station BTS which manages a cell 15 comprised in at least two tracking areas 70, transfers to the mobile terminals 30 comprised in the cell 15 it manages, at least one message comprising the identifiers of the tracking areas 70, the cell 15 managed by the base station BTS belongs to and preferably additional information according to the present invention.

According to the invention, each mobile terminal 30 receives the at least one message and decides which tracking area it belongs to using or not the additional information for the decision. The mobile terminal 30 sends to the base station BTS a message comprising the identifier of the tracking area 70 the mobile terminal 30 selects.

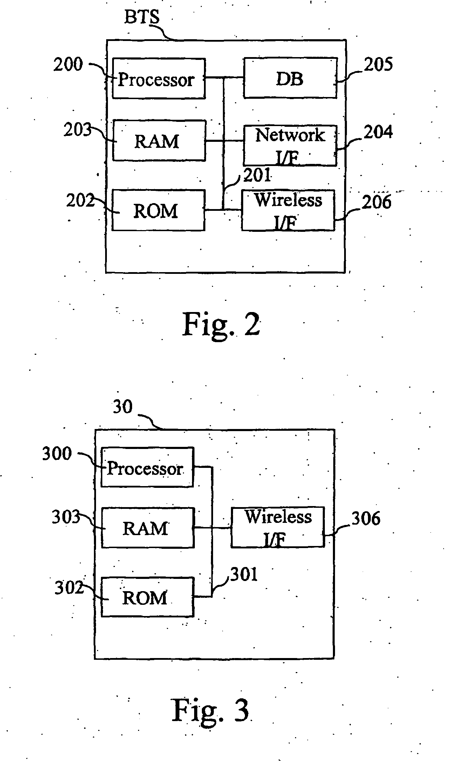

**Fig. 2** is a block diagram of a base station according to the present invention.

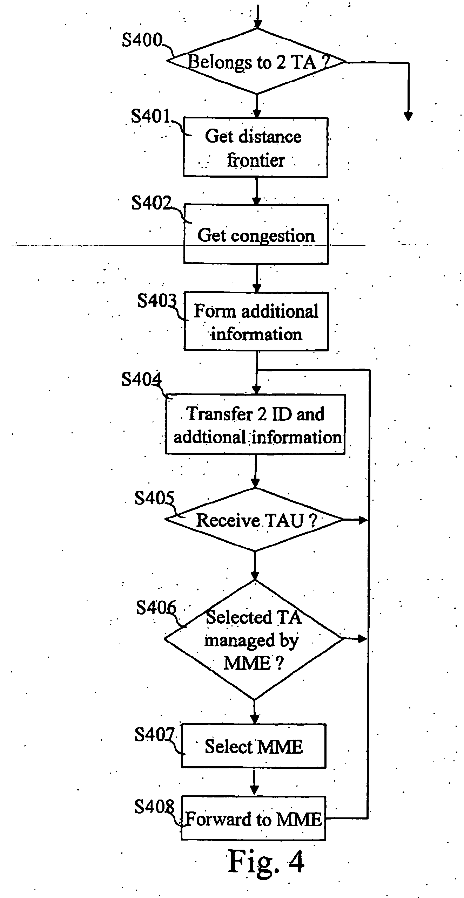

The base station BTS has, for example, an architecture based on components connected together by a bus 201 and a processor 200 controlled by the programs as disclosed in the Fig. 4.

It has to be noted here that the base station BTS is, in a variant, implemented under the form of one or several dedicated integrated circuits which execute the same operations as the one executed by the processor 200 as disclosed hereinafter.

The bus 201 links the processor 200 to a read only memory ROM 202, a random access memory RAM 203, a database 205, a network interface 204 and a wireless interface 206.

The memory 203 contains registers intended to receive variables, and the instructions of the program related to the algorithm as disclosed in the Fig. 4.

The processor 200 controls the operation of the network interface 204 and the wireless interface 206.

The wireless interface 206 comprises means for transferring at least one message comprising the identifiers of the tracking areas 70, the cell $15_{ab13}$ managed by the base station BTS belongs to and preferably additional information according to the present invention.

The wireless interface 206 comprises means for receiving from a mobile terminal 30 a message comprising the identifier of the tracking area 70 the mobile terminal 30 selects.

The read only memory 202 contains instructions of the program related to the algorithm as disclosed in the Fig. 4, which is transferred, when the base station BTS is powered on to the random access memory 203.

The base station BTS is connected to the telecommunication networks 50a and 50b through the network interface 204. As example, the network interface 204 is a DSL (Digital Subscriber Line) modem, or an ISDN (Integrated Services Digital Network) interface, etc. The communications established or received by the mobile terminal 30 located in the cell 15 managed by the base station BTS go through the network interface 204 and the wireless interface 206.

The data base 205 memorises data representative of the distance between the cell $15_{ab13}$ managed by the base station BTS and the frontier of at least one of the at least two tracking areas 70. More precisely, the distance between the cell $15_{ab13}$ managed by the base station BTS and the frontier of a least one tracking area is the shortest distance between the cell $15_{ab13}$ managed by the base station BTS and the frontier of the tracking area 70. As example, the data representative of the distance are the distance separating the cell $15_{ab13}$ and the cell $15_{a5}$ and the distance separating the cell $15_{ab13}$ and the cell $15_{b1}$. These data are memorized in the data base 205 when the base station BTS is installed in the wireless cellular telecommunication network or when some new base stations are added or when tracking areas are modified.

The data base 205 memorises also data representative of the congestion status of the mobility management entities 20a to 20d the base station BTS is connected to. The data representative of the congestion status are periodically updated or are updated on demand.

The database 205 also memorises the correspondence between each mobility management entity and each tracking area comprised at least one cell controlled by the base station.

**Fig. 3** is a block diagram of a mobile terminal according to the present invention.

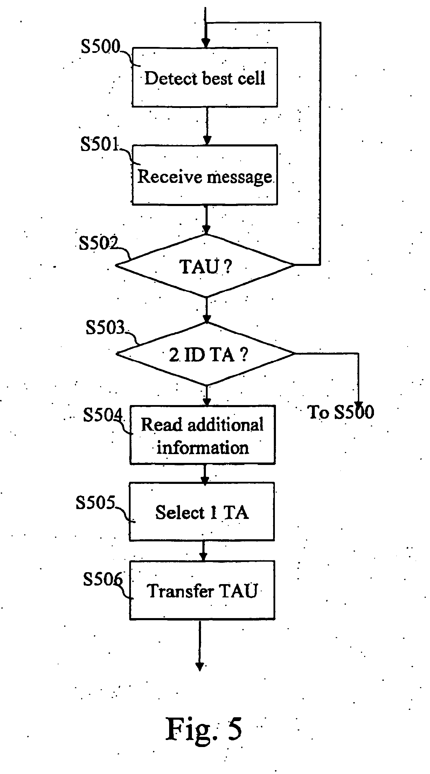

The mobile terminal 30 has, for example, an architecture based on components connected together by a bus 301 and a processor 300 controlled by the programs as disclosed in the Fig. 5.

It has to be noted here that the mobile terminal 30 is, in a variant, implemented under the form of one or several dedicated integrated circuits which execute the same operations as the one executed by the processor 300 as disclosed hereinafter.

The bus 301 links the processor 300 to a read only memory ROM 302, a random access memory RAM 303 and a wireless interface 306.

The memory 303 contains registers intended to receive variables, and the instructions of the program related to the algorithm as disclosed in the Fig. 5.

The processor 300 controls the operation of the wireless interface 306.

The read only memory 302 contains instructions of the program related to the algorithm as disclosed in the Fig. 5, which is transferred, when the mobile terminal 30 is powered on to the random access memory 303.

The wireless interface 306 comprises means for receiving at least one message comprising the identifiers of the tracking areas 70, of cell 15 in which the mobile terminal 30 is located, and preferably additional information according to the present invention.

The wireless interface 306 comprises means for transferring to the base station BTS which manages the cell 15 in which the mobile terminal 30 is located a message comprising the identifier of the tracking area 70 the mobile terminal 30 selects.

**Fig. 4** represents an algorithm executed by a base station in order to transfer the identifiers of at least two tracking area and preferably additional information.

The present algorithm is executed by each base station BTS which manages at least a cell of the wireless cellular telecommunication network.

At step S400, the processor 200 of the base station BTS checks whether or not the cell 15 managed by the base station BTS belongs to at least two tracking areas 70.

If the cell 15 managed by the base station BTS belongs to at least two tracking areas 70, the processor 200 moves to step S401. Otherwise, the processor 200 stops the present algorithm.

As example, if the processor 200 of the base station BTS which manages the cell $15_{a1}$ executes the present algorithm, it stops it as the cell $15_{a1}$ managed by the base station BTS belongs to the single tracking area $70b$.

If the processor 200 of the base station BTS which manages the cell $15_{ab13}$ executes the present algorithm, it moves to step S401 it as the cell $15_{ab13}$ managed by the base station BTS belongs to the tracking areas 70a and 70b.

At next step S401, the processor 200 gets, from the data basc 205, data representative of the distance between the cell $15_{ab13}$ managed by the base station BTS and the frontier of at least one of the at least two tracking areas 70. As example, the data representative of the distance are the distance separating the cell $15_{ab13}$ and the cell $15_{a5}$ and the distance separating the cell $15_{ab13}$ and the cell $15_{b1}$.

At next step S402, the processor 200 gets, from the data base 205, data representative of the congestion status of the mobility management entities 20a to 20d the base station BTS is connected to.

At next step S403, the processor 200 forms additional information.

The additional information are data representative of the distance between the cell $15_{ab13}$ managed by the base station BTS and the frontier of at least one of the at least two tracking areas 70 and/or of the congestion status of the mobility management entities 20a to 20d the base station BTS is connected to and/or of a probability associated to at least one tracking arca 70.

The probability associated to at least one tracking area 70 is determined from data representative of the distance between the cell $15_{ab13}$ managed by the base station BTS and the frontier of at least one of the at least two tracking areas and/or the congestion status of the mobility management entities 20a to 20d the base station BTS is connected and/or representative of a preferred tracking area 70a or 70b among the tracking areas 70.

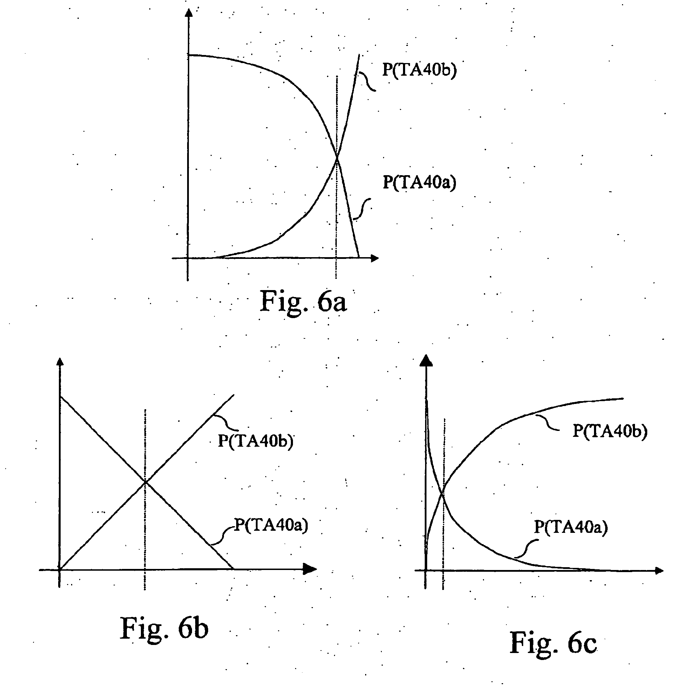

The probability associated to at least one tracking area 70 is as example determined using the curves shown in the Fig. 6a to 6c.

**Figs. 6a to 6c** represent an example of curves used for the determination of the additional information according to the present invention.

In the vertical axis of the Figs. 6a to 6c, the probability associated to the congestion status of the mobility management entities 20a to 20b which manage the tracking area 70a and the probability associated to the congestion status of the mobility management entities 20c to 20d which manage the Tracking area 70b are shown.

On each horizontal axis of the Figs. 6a to 6c, a ratio of the distance between the cell $15_{ab13}$ managed by the base station BTS and the frontier of at least one of the at least two tracking areas 70 is shown.

The ratio of the distance between the cell $15_{ab13}$ managed by the base station BTS and the frontier of at least one of the at least two tracking areas 70 is as example calculated according to the following formula:

$$R = \frac{D_{15ab13,15b1}}{D_{15ab13,15b1} + D_{15ab13,15a5}},$$

where $D_{15ab13,15b1}$ is the distance between the cell $15_{ab13}$ managed by the basc station BTS and the cell $15_{b1}$ and $D_{15ab13,15a5}$ is the distance between the cell $15_{ab13}$ managed by the base station BTS and the cell $15_{a5}$.

As example, the processor 200 calculates the ratio of the congestion status of the mobility management entities 20a, 20b, 20c and 20d according to the following formula

$$P_{cong} = \frac{P_{40a}}{P_{40a} + P_{40a}},$$

where $P_{40a}$ is the congestion status of the mobility management entities 20a and 20b and $P_{40b}$ is the congestion status of the mobility management entities 20c and 20d.

If $P_{cong} > \frac{1}{2}$, the processor 200 selects the curve of the Fig. 6a, if $P_{cong} = \frac{1}{2}$, the processor 200 selects the curve of the Fig. 6b and If $P_{cong} < \frac{1}{2}$, the processor 200 selects the curve of the Fig. 6c.

In Fig 6a, 6b, 6c only three curves are shown for three different value ranges of the ratio of the congestion status. However more curves applying to more values ranges of the ratio of the congestion status could be used without departing from the scope of the present invention.

From the ratio of the distance between the cell $15_{ab13}$ managed by the base station BTS and the frontier of at least one of the at least two tracking areas 70, the processor 200 using the curves noted P(TA40a) and P(TA40b), determines the probabilities associated to each Tracking area 70.

From the probabilities associated to each tracking Area 70, the processor 200 determines the preferred tracking area 70, as the tracking area 70 which has the highest determined probability.

At step S404, the processor 200 commands the transfer, through the wireless interface 206, to at least one, preferably all the mobile terminals 30 located in its cell $15_{ab13}$, of at least one message comprising the identifiers of the tracking areas 70, the cell $15_{ab13}$ managed by the base station BTS belongs to.

Preferably, the message comprises also the additional information determined at step S403.

At next step S405, the processor 200 checks if a tracking area update message is received from a mobile terminal 30 through the wireless interface 206.

As far as no tracking area update message is received, the processor 200 executes the steps S404 to S405.

If at step S405 a tracking area update message is received from a mobile terminal 30, the message comprises the identifier of the tracking area 70 the mobile terminal 30 has selected, the processor 200 moves to step S406.

It has to be noted here that, the message further comprises the identifier of the mobility management entity 20 which holds the context of the mobile terminal 30, i.e. the identifier of the mobility management entity which is in charge of the mobile terminal 30.

At next step S406, the processor 200 reads the database 205 and checks if the identifier of the tracking area 70 selected by the mobile terminal 30 corresponds to one tracking area 70 managed by the mobility management entity 20 indicated in the message received at step S405.

If the identifier of the tracking area 70 selected by the mobile terminal 30 corresponds to one tracking area 70 managed by the mobility management entity 20 indicated in the message received at step S405, the processor 200 forwards the message to the Mobility management Entity 20 indicated in the message and returns to step S404.

Else, at step S407, the processor 200 reads the database 205 and selects one mobility management entity 20 corresponding to the tracking area 70 selected by the mobile terminal 30. In a preferred implementation, the processor 200 selects the less congestionned mobility management entity 20 corrcsponding to the tracking area 70 selected the mobile terminal 30.

At next step S408, the processor 200 forwards the message received at step S405 to the mobility management entity 20 selected at step S407.

The mobility management entity 20 which controls the selected tracking area 70 gets the context of the mobile terminal 30 from the mobility management entity 20 which controls the previous Tracking area 70 identified in the received message, and establishes new security association.

After that the processor 200 moves to step S404.

**Fig. 5** represents a first algorithm executed by a mobile terminal in order to determine a tracking area of a wireless cellular telecommunication network.

The present algorithm is executed by each mobile terminal 30 of the wireless cellular telecommunication network. More precisely, the present algorithm is executed by the processor 300 of each mobile terminal 30.

At step S500, the processor 300 detects, through the wireless interface 306 the new best cell 15 around the mobile terminal 30.

At next step S501, the processor 300 detects the reception, through the wireless interface 306 of a message transferred by the base station BTS which manages the cell 15 detected by the mobile terminal 30 at step S500.

At next step S502, the processor 300 checks if it is time to transfer a tracking area update message.

Periodically, as example every five seconds, the mobile terminal 30 decides to transfer a tracking area update message to the base station BTS which manages the cell 15 in which the mobile terminal 30 is located.

As another example, the mobile terminal 30 decides to transfer a tracking area update message to the base station BTS which manages the cell 15 in which the mobile terminal 30 is located, when the message received at step S501 doesn't include the identifier of the tracking area 70 previously assigned to the mobile terminal 30.

As yet another example, the mobile terminal 30 decides to transfer a tracking area update message to the base station BTS which manages the cell 15 in which the mobile terminal 30 is located, when the mobile terminal 30 has yet been assigned any tracking area 70.

As far as it is not time to transfer a tracking area update message, the processor 300 executes the loop constituted by the steps S500 to S502.

If it is time to transfer a tracking area update message, the processor 300 moves to step S503.

At next step S503, the processor 300 checks if the message received at step S501 comprises at least two identifiers of tracking areas 70.

If the message received at step S501 comprises a single identifier of a tracking area 70, the mobile terminal 30 is located in a cell 15 which belongs to a single tracking area 70 and the processor 300 goes directly to step S506.

If the message received at step S501 comprises at least two identifiers of tracking areas 70, the processor 300 moves to step S504 or in a variant to step S505.

At step S504, the processor 300 reads additional information received from the base station BTS through the channel interface 306. The additional information are data representative of the distance between the cell $15_{ab13}$ managed by the base station BTS which is managing the cell $15_{ab13}$ the mobile terminal 30 is located in and the frontier of at least one of the at least two tracking arcas 70 and/or of the congestion status of the mobility management entities 20a to 20d the base station BTS is connected to and/or of a probability associated to at least one tracking area 70 and/or representative of a preferred tracking area 70 among the at least two tracking areas 70.

At next step S505, the processor 300 selects one identifier of a tracking area 70 among the at least two identifiers received at step S501.

As example, the processor 300 selects one identifier of a tracking area 70, i.e. selects a tracking area 70, by generating a random value comprised between zero and one.

In case there are two tracking areas, if the value is lower than 0.5, the processor 300 selects the first received identifier of a tracking area 70 comprised in the received message, otherwise, the processor 300 selects the second received identifier of a tracking area 70 comprised in the received message.

In case they are more than two tracking areas 70, as example three, if the value is lower than 0.33, the processor 300 selects the first received identifier of a tracking area 70 comprised in the received message, if the value is upper than or equal to 0.33 and lower than 0.66, the processor 300 selects the second received identifier of a tracking area 70 comprised in the received message, otherwise, the processor 300 selects the third received identifier of a tracking area 70 comprised in the received message.

In case they are two tracking areas 70, if the additional information is one probability P(TA40a) associated to one tracking area 70, the processor 300 calculates the probability value of the second tracking area 70 P(TA40b)= 1- P(TA40a) and selects the first identifier of a tracking area 70 of which the probability is the closest of the random value.

In case they are two tracking areas 70, if the additional information comprises two probabilities P(TA40a), the processor 300 selects the identifier of a tracking area 70 of which the probability is the closest of the random value.

In case they K tracking areas 70 with k>2, the additional information comprises K probabilities P(TA40k) with k=1 to K.

The processor 300 calculates for each probability P(TA40k), with k=1 to K, the value *Spk* according to the following formula:

$$Spk = \sum_{i=1}^{t} p(TA40i).$$

The processor 300 selects the identifier of a tracking area 70 of which the value *Spk* is the closest of the random value.

As example, if the additional information are data representative of the distance between the cell 15 managed by the base station BTS which is managing the cell 15 the mobile terminal 30 is located in and the frontier of at least one of the at least two tracking areas 70, the processor 300 selects the identifier of a tracking area which has the largest distance value.

As example, if the information are data representative of the congestion status of the mobility management entities 20a to 20d, the processor 300 the processor 300 selects the identifier of a tracking area of which the mobility management entities 20 have the lowest congestion status.

As example, if the information is representative of a preferred tracking area 70 among the at least two tracking Areas 70, the processor 300 selects the tracking area 70 identified as the preferred tracking area 70 representcd in the additional information read at step S504.

As example, if the information is representative of the distance between the cell 15 managed by the base station BTS which is managing the cell 15 the mobile terminal 30 is located in and the distance of at least one of the at least two tracking areas 70 and representative of the congestion status of the mobility management entities 20a to 20d, the processor 300 selects the identifier of a tracking area 70 using the curves shown in Fig 6a, 6b, 6c, in a similar way as described in step S403 of Fig. 4.

At next step S505, the processor 300 commands the transfer to the base station BTS through the wireless interface 305 of a tracking area update message comprising at least the identifier of the tracking area selected at step S505 or the single identifier comprised in the message received at step S501.

After that, the processor 300 returns to step S500,

Naturally, many modifications can be made to the embodiments of the invention described above without departing from the scope of the present invention.

**Claims**

1. Method for determining a tracking area (70a, 70b) of a wireless cellular telecommunication network comprising plural tracking areas (70a, 70b), each tracking area comprising plural cells (15) in which mobile terminals (30) are located, at least two tracking areas comprising cells ($15_{ab}$) comprised in the at least two tracking areas and cells belonging to a single tracking area ($15_a$, $15_b$), each cell being managed by a base station (BTS) of the wireless cellular telecommunication network, at least one base station (BTS) managing a cell comprised in the at least two tracking areas executes the step of transferring (S404) a message to at least a mobile terminal (30) comprised in the cell managed by the base station, the message comprising the identifiers of the at least two tracking areas in which the cell managed by the base station belongs to,
**characterised in that** the at least one base station (BTS) managing a cell comprised in the at least two tracking areas execute the step of receiving a message (S405) from the mobile terminals, the message comprising one single identifier among the identifiers transferred to the mobile terminal, the identifier being the identifier of the tracking area selected by the mobile terminal.

2. Method according to claim 1, **characterised in that** the method comprises further step of transferring additional information (S404), the additional information being data representative of the distance between the cell managed by the base station and the frontier of at least one of the at least two tracking areas and/or of the congestion status of at least one mobility management entity the base station is connected to and/or of at least one probability associated to at least one of the at least two tracking areas and/or representative of a preferred tracking area among the at least two tracking areas.

3. Method according to claim 2, **characterised in that** the probability associated to one tracking area is determined from data representative of the distance between the cell managed by the base station and the frontier of at least one of the at least two tracking areas and/or of the congestion status of at least one mobility management entity the base station is connected to.

4. Method according to claim 2, **characterised in that** one probability is associated to each tracking area and the preferred tracking area is determined as the tracking area of which the associated probability is the highest among the probabilities.

5. Method for determining a tracking area (70a, 70b) of a wireless cellular telecommunication network comprising plural tracking areas (70a, 70b), each tracking area comprising plural cells (15) in which mobile terminals (30) are located, at least two tracking areas comprising cells ($15_{ab}$) comprised in the at least two tracking areas and cells ($15_a$, $15_b$) belonging to a single tracking area, each cell being managed by a base station (BTS) of the wireless cellular telecommunication network, **characterised in that** at least one mobile terminal (30) located in a cell comprised in the at least two tracking areas executes the steps of

- receiving (S501) a message from the base station managing the cell the mobile terminal is located in, the message comprising the identifiers of the tracking areas in which the cell managed by the base station belongs to, **characterized by** the steps of
- selecting (S505) one identifier among the identifiers received by the mobile terminal,
- transferring (S506) a message to the base station which transferred the received message, the message comprising the selected identifier.

6. Method according to claim 5, **characterised in that** the method comprises further step of receiving (S500) additional information, the additional information being data representative of the distance between the cell managed by the base station and the frontier of at least one of the at least two tracking areas and/or of the congestion status of at least one mobility management entity the base station is connected to and/or of a probability associated to at least one of the two tracking areas and/or representative of a preferred tracking area among the at least two tracking areas.

7. Method according to claim 6, **characterised in that** the identifier among the identifiers received by the mobile terminal is selected by generating a random value and comparing the generated random value with the probability associated to at least one of the two tracking areas.

8. Method according to any of the claims 5 to 7, **characterised in that** the method comprises further step of executed prior to the reception of the message from the base station of:

- transferring (S502) periodically a message to the base station, the message being a tracking area update message.

9. Base station (BTS) of a wireless cellular telecommunication network comprising plural tracking areas (70a, 70b), each tracking area comprising plural cells (15) in which mobile terminals (30) are located, at least two tracking areas comprising cells (15$_{ab}$) comprised in the at least two tracking areas and cells (15$_a$, 15$_b$) belonging to a single tracking area, each cell being managed by a base station of the wireless cellular telecommunication network, the base station managing a cell comprised in the two tracking areas comprises means (206) for transferring a message to at least a mobile terminal comprised in the cell managed by the base station, the message comprising the identifiers of the at least two tracking areas in which the cell managed by the base station belongs to,
**characterised in that** the base station managing a cell comprised in the two tracking areas comprises means (206) for receiving a message from the mobile terminal, the message comprising one single identifier among the identifiers transferred to the mobile terminal, the identifier being the identifier of the tracking area selected by the mobile terminal.

10. Mobile terminal (30) of a wireless cellular telecommunication network comprising plural tracking areas (70a, 70b), each tracking area comprising plural cells (15) in which mobile terminals (30) are located, at least two tracking areas comprising cells (15$_{ab}$) comprised in the at least two tracking areas and cells (15$_a$, 15$_b$) belonging to a single tracking area, each cell being managed by a base station of the wireless cellular network, the mobile terminal being located in a cell comprised in the at least two tracking areas **characterised in that** the mobile terminal comprises:

- means (306) for receiving a message from the base station managing the cell the mobile terminal is located in, the message comprising the identifiers of the at least two tracking areas in which the cell managed by the base station belongs to, **characterized by**
- means (300) for selecting one identifiers among the identifiers received by the mobile terminal,
- means (306) for transferring a message to the base station which transferred the received message, the message comprising the selected identifier.

**Patentansprüche**

1. Verfahren zum Bestimmen eines Nachführgebiets (70a, 70b) eines drahtlosen zellularen Telekommunikationsnetzes mit mehreren Nachführgebieten (70a, 70b), wobei jedes Nachführgebiet mehrere Zellen (15) umfasst, in welchen mobile Endgeräte (30) angeordnet sind, wobei wenigstens zwei Nachführgebiete Zellen (15$_{ab}$) umfassen, die in den wenigstens zwei Nachführgebieten umfasst sind, und Zellen (15$_a$, 15$_b$), die zu einem einzigen Nachführgebiet gehören, wobei jede Zelle durch eine Basisstation (BTS) des drahtlosen zellularen Telekommunikationsnetzes gemanagt wird, wobei wenigstens eine Basisstation (BTS), die eine Zelle managt, die in den wenigstens zwei Nachführgebieten umfasst ist, den Schritt zum Transferieren (S404) einer Nachricht zu wenigstens einem mobilen Endgerät (30) ausführt, das in der Zelle umfasst ist, die durch die Basisstation gemanagt wird, wobei die Nachricht die identifizierer der wenigstens zwei Nachführgebiete umfasst, zu welchen die durch die Basisstation gemanagte Zelle gehört,

**dadurch gekennzeichnet, dass** die wenigstens eine Basisstation (BTS), die eine Zelle managt, die in den wenigstens zwei Nachführgebieten umfasst ist, den Schritt zum Empfangen einer Nachricht (S405) von dem mobilen Endgerät ausführt, wobei die Nachricht einen einzigen identifizierer unter den zu dem mobilen Endgerät transferierten identifizierern umfasst, wobei der Identifizierer der Identifizierer des durch das mobile Endgerät ausgewählten Nachführgebiets ist.

2. Verfahren nach Anspruch 1, **dadurch gekennzeichnet, dass** das Verfahren einen weiteren Schritt zum Transferieren (5404) zusätzlicher Information aufweist, wobei die zusätzliche Information Daten sind, die den Abstand zwischen der durch die Basisstation gemanagten Zelle und der Grenze wenigstens eines der wenigstens zwei Nachführgebiete und/oder den Verkehrbelastungszustand wenigstens einer Mobilitätsmanagementeinheit, mit der die Basisstation verbunden ist, und/oder wenigstens eine zu wenigstens einem der wenigstens zwei Nachführgebiete gehörende Wahrscheinlichkeit darstellen und/oder ein bevorzugtes Nachführgebiet unter den wenigstens zwei Nachführgebieten darstellen.

3. Verfahren nach Anspruch 2, **dadurch gekennzeichnet, dass** die zu einem Nachführgebiet gehörende Wahrscheinlichkeit aus Daten bestimmt wird, die den Abstand zwischen der durch die Basisstation gemanagten Zelle und der Grenze wenigstens eines der wenigstens zwei Nachführgebiete und/oder den Verkehrsbelastungszustand wenigstens einer Mobilitätsmanagementeinheit, mit der die Basisstation verbunden ist, darstellen.

4. Verfahren nach Anspruch 2, **dadurch gekennzeichnet, dass** eine Wahrscheinlichkeit zu jedem Nachführgebiet gehört und das bevorzugte Nachführgebiet als das Nachführgebiet bestimmt wird, von welchem die zugehörige Wahrscheinlichkeit unter den Wahrscheinlichkeiten am höchsten ist.

5. Verfahren zum Bestimmen eines Nachführgebiets (70a, 70b) eines drahtlosen zellularen Telekommunikationsnetzes mit mehreren Nachführgebieten (70a, 70b), wobei jedes Nachführgebiet mehrere Zellen (15) umfasst, in welchen mobile Endgeräte (30) angeordnet sind, wobei wenigstens zwei Nachführgebiete Zellen (15$_{ab}$) umfassen, die in den wenigstens zwei Nachführgebieten umfasst sind, und Zellen (15$_a$, 15$_b$), die zu einem einzigen Nachführgebiet gehören, wobei jede Zelle durch eine Basisstation (BTS) des drahtlosen zellularen Telekommunikationsnetzes gemanagt wird, wobei wenigstens ein mobiles Endgerät (30), das in einer Zelle angeordnet ist, die in den wenigstens zwei Nachführgebieten umfasst ist, die folgenden Schritte ausführt:

- Empfangen (S501) einer Nachricht von der Basisstation, die die Zelle managt, in der das mobile Endgerät angeordnet ist, wobei die Nachricht die identifizierer der Nachführgebiete umfasst, zu weichen die durch die Basisstation gemanagte Zelle gehört, **gekennzeichnet durch** die folgenden Schritte:
- Auswählen (S505) eines identifizierers unter den **durch** das mobile Endgerät empfangenen identifizierern,
- Transferieren (S506) einer Nachricht zu der Basisstation, die die empfangene Nachricht transferierte, wobei die Nachricht den ausgewählten identifizierer umfasst.

6. Verfahren nach Anspruch 5, **dadurch gekennzeichnet, dass** das Verfahren weiterhin einen Schritt zum Empfangen (S500) zusätzlicher Information aufweist, wobei die zusätzliche Information Daten sind, die den Abstand zwischen der durch die Basisstation gemanagten Zelle und der Grenze wenigstens eines der wenigstens zwei Nachführgebiete und/oder den Verkehrbelastungszustand wenigstens einer Mobilitätsmanagementeinheit, mit der die Basisstation verbunden ist, und/oder eine zu wenigstens einem der zwei Nachführgebiete gehörende Wahrscheinlichkeit darstellen und/oder ein bevorzugtes Nachführgebiet unter den wenigstens zwei Nachführgebieten darstellen.

7. Verfahren nach Anspruch 6, **dadurch gekennzeichnet, dass** der Identifizierer unter den durch das mobile Endgerät empfangenen Identifizierern durch Erzeugen eines zufälligen Werts und Vergleichen des erzeugten zufälligen Werts mit der zu wenigstens einem der zwei Nachführgebiete gehörenden Wahrscheinlichkeit ausgewählt wird.

8. Verfahren nach einem der Ansprüche 5 bis 7, **dadurch gekennzeichnet, dass** das Verfahren weiterhin folgenden Schritt aufweist, der vor dem Empfang der Nachricht von der Basisstation ausgeführt wird:

- periodisches Transferieren (S502) einer Nachricht zu der Basisstation, wobei die Nachricht eine Nachführgebiets-Aktualisierungsnachricht ist.

9. Basisstation (BTS) eines drahtlosen zellularen Telekommunikationsnetzes mit mehreren Nachführgebieten (70a, 70b), wobei jedes Nachführgebiet mehrere Zellen (15) umfasst, in welchen mobile Endgeräte (30) angeordnet sind, wobei wenigstens zwei Nachführgebiete Zellen ($15_{ab}$) umfassen, die in den wenigstens zwei Nachführgebieten umfasst sind, und Zellen ($15_a$, $15_b$), die zu einem einzigen Nachführgebiet gehören, wobei jede Zelle durch eine Basisstation (BTS) des drahtlosen zellularen Telekommunikationsnetzes gemanagt wird, wobei die Basisstation, die eine Zelle managt, die in den zwei Nachführgebieten umfasst ist, eine Einrichtung (206) zum Transferieren einer Nachricht zu wenigstens einem mobilen Endgerät aufweist, das in der durch die Basisstation gemanagten Zelle umfasst ist, wobei die Nachricht die Identifizierer der wenigstens zwei Nachführgebiete umfasst, zu welchen die durch die Basisstation gemanagte Zelle gehört,

**dadurch gekennzeichnet, dass** die Basisstation, die eine Zelle managt, die in den zwei Nachführgebieten umfasst ist, eine Einrichtung (206) zum Empfangen einer Nachricht von dem mobilen Endgerät aufweist, wobei die Nachricht einen einzigen Identifizierer unter den zu dem mobilen Endgerät transferierten Identifizierern umfasst, wobei der Identifizierer der Identifizierer des durch das mobile Endgerät ausgewählten Nachführgebiets ist.

**10.** Mobiles Endgerät (30) eines drahtlosen zellularen Telekommunikationsnetzes mit mehreren Nachführgebieten (70a, 70b), wobei jedes Nachführgebiet mehrere Zellen (15) umfasst, in welchen mobile Endgeräte (30) angeordnet sind, wobei wenigstens zwei Nachführgebiete Zellen ($15_{ab}$) umfassen, die in den wenigstens zwei Nachführgebieten umfasst sind, und Zellen ($15_a$, $15_b$), die zu einem einzigen Nachführgebiet gehören, wobei jede Zelle durch eine Basisstation (BTS) des drahtlosen zellularen Telekommunikationsnetzes gemanagt wird, wobei das mobile Endgerät in einer Zelle angeordnet ist, die in den wenigstens zwei Nachführgebieten umfasst ist, wobei das mobile Endgerät folgendes aufweist:

- eine Einrichtung (306) zum Empfangen einer Nachricht von der Basisstation, die die Zelle managt, in der das mobile Endgerät angeordnet ist, wobei die Nachricht die Identifizierer der wenigstens zwei Nachführgebiete umfasst, zu welchen die durch die Basisstation gemanagte Zelle gehört,
**gekennzeichnet durch**
- eine Einrichtung (300) zum Auswählen eines Identifizierers unter den **durch** das mobile Endgerät empfangenen Identifizierern,
- eine Einrichtung (306) zum Transferieren einer Nachricht zu der Basisstation, die die empfangene Nachricht transferierte, wobei die Nachricht den ausgewählten Identifizierer umfasst.

**Revendications**

**1.** Méthode pour déterminer une zone de cheminement (70a, 70b) d'un réseau de télécommunication cellulaire sans fil comportant une pluralité de zones de cheminement (70a, 70b), chaque zone de cheminement comportant une pluralité de cellules (15) dans lesquelles des terminaux mobiles (30) sont situés, au moins deux zones de cheminement comportant des cellules ($15_{ab}$) comprises dans les au moins deux zones de cheminement et des cellules appartenant à une seule zone de cheminement ($15_a$, $15_b$), chaque cellule étant contrôlée par une station de base (BTS) du réseau de télécommunication cellulaire sans fil, au moins une station de base (BTS) contrôlant une cellule comprise dans les au moins deux zones de cheminement exécute l'étape (S404) de transfert d'un message à au moins un terminal mobile (30) compris dans la cellule contrôlée par la station de base, le message comportant les identifiants des au moins deux zones de cheminement auxquelles la cellule contrôlée par la station de base appartient, **caractérisée en ce que** la au moins une station de base (BTS) contrôlant une cellule comprise dans les au moins deux zones de cheminement exécute l'étape de réception d'un message (S405) du terminal mobile, le message comportant un seul identifiant parmi les identifiants transférés au terminal mobile, l'identifiant étant l'identifiant de la zone de cheminement choisie par le terminal mobile.

**2.** Méthode selon la revendication 1, **caractérisée en ce que** la méthode comporte en outre l'étape de transfert d'informations additionnelles (S404), les informations additionnelles étant représentatives de la distance entre la cellule contrôlée par la station de base et la frontière d'au moins une des au moins deux zones de cheminement et/ou du statut de congestion d'au moins une entité de gestion de mobilité à laquelle la station de base est reliée et/ou au moins une probabilité associée au moins à une des au moins deux zones de cheminement et/ou représentatives d'une zone de cheminement préférée parmi les au moins deux zones de cheminement.

**3.** Méthode selon la revendication 2, **caractérisée en ce que** la probabilité associée à une zone de cheminement est déterminée à partir de données représentatives de la distance entre la cellule contrôlée par la station de base et la frontière au moins d'une des au moins deux zones de cheminement et/ou du statut de congestion de la au moins une entité de gestion de mobilité à laquelle la station de base est reliée.

**4.** Méthode selon la revendication 2, **caractérisée en ce qu'**une probabilité est associée à chaque zone de cheminement et la zone de cheminement préférée est déterminée comme la zone de cheminement dont la probabilité associée est la plus élevée parmi les probabilités.

5. Méthode pour déterminer une zone de cheminement (70a, 70b) d'un réseau de télécommunication cellulaire sans fil comportant une pluralité de zones de cheminement (70a, 70b), chaque zone de cheminement comportant une pluralité de cellules (15) dans lesquelles des terminaux mobiles (30) sont situés, au moins deux zones de cheminement comportant des cellules ($15_{ab}$) comprises dans les au moins deux zones de cheminement et des cellules ($15_a$, $15_b$) appartenant à une seule zone de cheminement, chaque cellule étant contrôlée par une station de base (BTS) du réseau de télécommunication cellulaire sans fil, **caractérisée en ce que** au moins un terminal mobile (30) situé dans une cellule comprise dans les au moins deux zones de cheminement exécute les étapes de :

- réception (S501) d'un message de la station de base contrôlant la cellule dans laquelle le terminal mobile est localisé, le message comportant les identifiants des zones de cheminement auxquelles la cellule contrôlée par la station de base appartient, **caractérisée par** les étapes de :
- sélection (S505) d'un identifiant parmi les identifiants reçus par le terminal mobile,
- transfert (S506) d'un message à la station de base qui a transféré le message reçu, le message comportant l'identifiant choisi.

6. Méthode selon la revendication 5, **caractérisée en ce que** la méthode comporte en outre l'étape de réception (S500) d'informations additionnelles, les informations additionnelles étant représentatives de la distance entre la cellule contrôlée par la station de base et la frontière d'au moins une des au moins deux zones de cheminement et/ou du statut de congestion d'au moins une entité de gestion de mobilité à laquelle la station de base est reliée et/ou d'une probabilité associée au moins à une des deux zones de cheminement et/ou représentatives d'une zone de cheminement préférée parmi les au moins deux zones de cheminement.

7. Méthode selon la revendication 6, **caractérisée en ce que** l'identifiant parmi les identifiants reçus par le terminal mobile est choisi en générant une valeur aléatoire et en comparant la valeur aléatoire générée à la probabilité associée à au moins une des deux zones de cheminement.

8. Méthode selon l'une des revendications 5 à 7, **caractérisée en ce que** la méthode comporte en outre l'étape exécutée avant la réception du message de la station de base de :

- transfert (S502) périodique d'un message à la station de base, le message étant un message de mise à jour de secteur de cheminement.

9. Station de base (BTS) d'un réseau de télécommunication cellulaire sans fil comportant une pluralité de zones de cheminement (70a, 70b), chaque zone de cheminement comportant une pluralité de cellules (15) dans lesquelles des terminaux mobiles (30) sont situés, au moins deux zones de cheminement comportant des cellules ($15_{ab}$) comprises dans les au moins deux zones de cheminement et des cellules ($15_a$, $15_b$) appartenant à une seule zone de cheminement, chaque cellule étant contrôlée par une station de base du réseau de télécommunication cellulaire sans fil, la station de base contrôlant une cellule comprise dans les deux zones de cheminement comporte des moyens (206) pour transférer un message à au moins un terminal mobile compris dans la cellule contrôlée par la station de base, le message comportant les identifiants des au moins deux zones de cheminement auxquelles la cellule contrôlée par la station de base appartient, **caractérisée en ce que** la station de base contrôlant la cellule comprise dans les deux zones de cheminement comporte les moyens (206) pour recevoir un message du terminal mobile, le message comportant un seul identifiant parmi les identifiants transférés au terminal mobile, l'identifiant étant l'identifiant de la zone de cheminement choisie par le terminal mobile.

10. Terminal mobile (30) d'un réseau de télécommunication cellulaire sans fil comportant une pluralité de zones de cheminement (70a, 70b), chaque zone de cheminement comportant une pluralité de cellules (15) dans lesquelles les terminaux mobiles (30) sont situés, au moins deux zones de cheminement comportant des cellules ($15_{ab}$) comprises dans les au moins deux zones de cheminement et des cellules ($15_a$, $15_b$) appartenant à une seule zone de cheminement, chaque cellule étant contrôlée par une station de base du réseau de télécommunication cellulaire sans fil, le terminal mobile étant situé dans une cellule comprise dans les au moins deux zones de cheminement, **caractérisé en ce que** le terminal mobile comporte :

- des moyens (306) pour recevoir un message de la station de base contrôlant la cellule dans laquelle le terminal mobile est localisé, le message comportant les identifiants des au moins deux zones de cheminement auxquelles la cellule contrôlée par la station de base appartient, **caractérisé par**
- des moyens (300) de sélection d'un identifiant parmi les identifiants reçus par le terminal mobile,
- des moyens (306) de transfert d'un message à la station de base qui a transféré le message reçu, le message comportant l'identifiant choisi.

Fig. 1

BTS

200 — Processor    DB — 205

203 — RAM    Network I/F — 204

201

202 — ROM    Wireless I/F — 206

**Fig. 2**

30

300 — Processor

303 — RAM    Wireless I/F — 306

301

302 — ROM

**Fig. 3**

S400 — Belongs to 2 TA ?

S401 — Get distance frontier

S402 — Get congestion

S403 — Form additional information

S404 — Transfer 2 ID and addtional information

S405 — Receive TAU ?

S406 — Selected TA managed by MME ?

S407 — Select MME

S408 — Forward to MME

# Fig. 4

S500 — Detect best cell

S501 — Receive message

S502 — TAU ?

S503 — 2 ID TA ?

To S500

S504 — Read additional information

S505 — Select 1 TA

S506 — Transfer TAU

## Fig. 5

Fig. 6a

Fig. 6b

Fig. 6c

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1715715 A

- EP 1657949 A